# EUROPÄISCHE PATENTSCHRIFT

(11) **EP 0 973 348 B1**
(45) Veröffentlichungstag und Bekanntmachung des Hinweises auf die Patenterteilung: **31.08.2005**
(21) Anmeldenummer: 99112530.3
(22) Anmeldetag: 01.07.1999
(51) Int. Cl.: H04Q 7/34

(54) **Testeinrichtung und -verfahren zur laufenden Überprüfung der Dienste in GSM-Netzen**
System and method for the continous checking of services in GSM networks
Système et procédé pour tester de façon continue les services dans des réseaux GSM

(30) Priorität: 16.07.1998 DE 19831929
(43) Veröffentlichungstag der Anmeldung: 19.01.2000
(73) Patentinhaber: Acterna Schweiz AG, 3018 Bern (CH)
(72) Erfinder: Staber, Edwin, 5621 Zufikon (CH)
(74) Vertreter: Barth, Carl Otto

(56) Entgegenhaltungen:
- WO-A-95/33352
- DE-C- 19 620 164

## Beschreibung

### Stand der Technik

Die Erfindung liegt auf dem Gebiet der Mobilfunktelefonie. Sie betrifft eine Testeinrichtung und ein Verfahren zu deren Betrieb für die permanente Überprüfung der von einem GSM-Netz (Global System for Mobile Communication) zur Verfügung gestellten Dienste. Insbesondere wird dabei geprüft, ob die von einem Teilnehmer in seinem Heimnetz, bzw. in seiner Heimlokation abonnierten Dienste im besuchten Netz, bzw. Lokation auch verfügbar sind. Neben diesen sogenannten Roamingtests, ist es auch von Interesse, mit welcher Qualität die im GSM Netz angebotenen Dienste verfügbar sind. Da die Netzfunktionen und Dienste in einer Art getestet werden sollen, wie ein Teilnehmer sie tatsächlich benutzt, müssen sie sinnvollerweise von den Teilnehmerschnittstellen aus getestet werden. Besonders wichtig sind dabei die Teilnehmerschnittstellen an der Luftschnittstelle, d.h. zur Mobilstation (MS) und am Festnetz für herkömmliche, analoge und ISDN-Teilnehmeranschlüsse (Integrated Services Digital Network). Jedoch sind für besondere Tests auch interne Schnittstellen des GSM-Netzes von Bedeutung, wie z.B. die sog. A-Schnittstelle am MSC (Mobile Switching Center).

Mobilkommunikationsnetze wie das GSM (Global System for Mobile Communication) erfreuen sich steigender Benutzerzahlen wegen der guten Verfügbarkeit, dem schnellem Verbindungsaufbau und der weltweiten Erreichbarkeit unter derselben Nummer. Um sicherzustellen, dass ein solches, höchst komplexes System unter den mannigfaltigen Randbedingungen ausreichend und zuverlässig funktioniert, sind eine Reihe von Massnahmen notwendig. Eine dieser Massnahmen ist das praktisch ununterbrochen durchgeführte Testen der verschiedensten Funktionen der Netze und der angebotenene Dienste, die ja ständigen Änderungen, insbesondere Erweiterungen unterliegen. Dabei kommt einerseits dem Testen der sogenannten Luftschnittstelle, d.h. der Funkverbindung zwischen dem mobilen Teilnehmer-Endgerät, der Mobilstation (MS), oft einfach Handy genannt, und der sogenannten Basisstation, d.h. der ortsfesten Sende/Empfangsstation, deswegen besondere Bedeutung zu, weil eine Funkübertragung naturgemäss wesentlich grösseren Störeinflüssen ausgesetzt ist als eine Leitungsübertragung. Andererseits nimmt auch, wie unten erläutert, die Zahl der Schnittstellen an anderen Stellen rapide zu, so dass es zweckmässig sein kann, auch diese in Tests einzubeziehen, wenn man zuverlässige Ergebnisse erhalten will.

Für das Testen der Luftschnittstelle in einem Mobilkommunikationsnetz ist es bekannt, für die Leitweglenkung und die Gebührenerfassung automatisierte Testeinrichtungen zu benutzen. Eine solche Einrichtung und das entsprechende Betriebsverfahren sind in der deutschen Patentschrift DE 196 20 164 beschrieben. Die dort dargestellte Testeinrichtung besteht im Wesentlichen aus einer speziellen Mobilstation (MS), sprich Handy, das mit einer drahtgebundenen Schnittstelle versehen ist, einem Multiplexer zur Aufnahme und wechselweisen Bedienung mehrerer Datenmodule, d.h. SIMs (Subscriber Identity Modules), und einem Rechner, der die gesamte Anlage steuert. Die MS enhält statt eines SIMs ein Adaptermodul, welches per Draht mit dem Multiplexer so verbunden ist, dass jeweils eines der im Multiplexer enthaltenen SIMs in der MS emuliert wird. Die Auswahl des jeweilig gewünschten SIMs und die Steuerung des gesamten Testprozesses erfolgt durch den Steuerrechner, der zu diesem Zweck sowohl mit der MS als auch mit dem Multiplexer verbunden sein muss.

Zweifellos erlaubt die in der DE 196 20 164 beschriebene Einrichtung bereits einen automatisierten Test der Leitweglenkung und Gebührenerfassung. Sie hat aber den Nachteil, dass man eine Vielzahl von Multiplexern an verschiedenen Orten vorsehen muss, um sich über ein ganzes Netz und ggf. mehrere Länder erstreckende, ausgedehnte Tests durchführen zu können. Solche ausgedehnten Tests sind wegen der stetig zunehmenden Roaming-Möglichkeiten heute unverzichtbar geworden. Als Roaming bezeichnet man die Verwendung einer MS ausserhalb des Heimatnetzes, in dem es registriert ist und in dessen Datenbanken seine Daten gespeichert sind.

Ausserdem reicht die Konzentration auf das Testen der Luftschnittstellen allein nicht mehr aus, da auch die Zahl anderer Netzübergänge zunimmt. Infolge der stetig steigenden Anzahl von Netzbetreibern, wozu die Deregulierung in vielen Ländern beiträgt, wächst die Zahl der Netzübergänge zwischen Mobilfunknetzen einerseits wie auch die der Netzübergänge zu und zwischen Festnetzen ständig. Daher ist es angebracht und erforderlich, auch Festnetz-Übergänge in die Tests einzubeziehen.

Damit hängt zusammen, dass für den internationalen und nationalen Roamingtest von jedem Netz, bzw. von jeder Location inberhalb eines Netzes, ein SIM in allen zu testenden Netz-zugängen notwendig ist. Die Konfiguration mit verteilten SIMs verlangt vom Betreiber einen erheblichen Aufwand an Konfigurationsarbeit. Einerseits steigt mit der Zunahme der Mobilfunknetze die Anzahl der Roamingabkommen, andererseits steigt mit der Zunahme der Teilnehmer notwendigerweise die Anzahl der MSC (Mobile Switching Center) und somit der Locationen im Netz. Um die volle Verfügbarkeit der Dienste der eigenen und der roamenden Teilnehmer jederzeit sicherzustellen, muss also in jeder Location mit jedem SIM getestet werden, was wiederum in jeder Location eine grosse Anzahl SIMs notwendig macht. Die Ausdehnung der Netze, gewöhnlich landesweit, wenn nicht sogar international, erschwert die Wartung dieser umfangreichen Sätze von lokal verstreuten SIMs und erfordert erheblichem materiellen und zeitlichen Aufwand.

### Die Erfindung

Es ist demgemäss Aufgabe der Erfindung, eine Testeinrichtung und ein Testverfahren zu schaffen, das in der Lage ist, die skizzierten Probleme zu lösen. Dazu sollen Tests in effizienter Weise möglichst zentral von einem einzigen Ort aus über bereits existierende Datennetze durchgeführt werden können. Mit anderen Worten, die Erfindung soll sofort und ohne Änderung oder Erweiterung bestehender Mobilkommunikationsnetze eingesetzt werden können. Sie soll weiterhin insofern adaptiv sein, als sie an Netzänderungen oder Netzerweiterungen, bei Zunahme der Roamingabkommen und der Teilnehmerzahlen und der damit verbundenen Zunahme der Home Location Register (HLR), die eine Änderung eines oder mehrer Tests oder Teilen davon erfordern, durch einfache Modifikation, vorzugsweise der Software, an zentraler Stelle angepasst werden kann.

Diese Aufgaben werden im Prinzip dadurch gelöst, dass erfindurgsgemäss mindestens ein zentraler Server vorgesehen ist, der eine Vielzahl von SIMs aufnehmen kann, und dass eine Vielzahl geografisch verteilte, mit Adaptermodulen ausgestattete Mobilstationen, bzw. durch Software-Prozesse simulierte Mobilstationen, auf diesen zentralen Server über mindestens ein existierendes Datennetz zugreifen kann, so dass jedes SIM in jeder der verteilten Mobilstationen emuliert werden kann. Weitere Ausgestaltungen der Erfindung sind den Patentansprüchen, Einzelheiten der nachfolgenden Beschreibung zu entnehmen.

Die erfindungsgemässe Testeinrichtung erlaubt es nicht nur, die Verfügbarkeit der zur Verfügung gestellten Dienste ständig zu überprüfen, sondern auch, diese Tests ständig zu ändern und, wenn immer nötig, den wachsenden Anforderungen in effizienter Weise anzupassen. Insbesondere sollen dabei folgende Tests durchgeführt, bzw. folgende Dienste oder Services getestet werden:
- Basic Services, d.h. die Grunddienste, welche jeden Teilnehmer zur Verfügung stehen
- Supplementary Services, d.h. Zusatzdienste wie z.B. Rufumleitungen, Anrufe sperren
- Daten und FAX Services, d.h. Nicht-Sprachdienste, die viele MS verarbeiten können
- Taxierung, d.h. die Gebührenerfassung, -berechnung und ggf. -anzeige
- International Roaming, d.i. der Verbindungsaufbau ausserhalb des Heimatlandes
- National Roaming, d.i. der Verbindungsaufbau ausserhalb der Lokation, in der das betreffende SIM registriert ist.

### Ausführungsbeispiel

Nachfolgend wird ein Ausführungsbeispiel der Erfindung in Verbindung mit den Zeichnungen näher beschrieben.

In den Zeichnungen zeigen:
- Fig. 1: eine Gesamtansicht der Testanordnung
- Fig. 2: ein Testmodul für Luftschnittstellen
- Fig. 3: den zentralen SIM-Server
- Fig. 4: Einzelheiten des Steuereinheit
- Fig. 5: ein Testmodul für A-Schnittstellen
- Fig. 6: ein Testmodul für Festnetz-Schnittstellen Fig. 7 ein Beispiel für den Anschluss des SIM-Servers an das GSM-Netz

Um die Dienste eines GSM-Netzes zu benutzen, werden für die Authentication, die Identification und das Ciphering die im SIM gespeicherten geheimen Algorithmen und der vom Netzbetreiber abhängige Key benötigt. Ohne diese Information ist es nicht möglich, die angebotenen Dienste zu nutzen.

Das Testsystem benutzt im wesentlichen Testmodule (TM), welche die Testzugriffe über sog. A-Interfaces, über Luftschnittstellen und/oder herkömmliche Festnetzschnittstellen bereitstellen. An einem A-Interface werden die Funktionen der MS durch Software-Prozesse simuliert. An einer Luftschnittstelle werden handelsübliche MS benutzt. Beide Testverfahren benutzen aus Gründen der Geheimhaltung der Algorithmen und Keys reale SIMs. Normalerweise befinden sich die SIMs direkt in den Mobilstationen (MS), bzw. der Software-Prozess greift unmittelbar auf ein SIM zu. Da aber in einem Testsystem eine grössere Anzahl räumlich verteilter MS und Software-Prozesse vorhanden sind, wird üblicherweise an jedem Standort auch die notwendige Anzahl SIMs bereitgestellt. Mit anderen Worten, je nach Testart muss an jeden Standort, bzw. an bestimmten Standorten, dauernd oder temporär eine gewisse Auswahl und Anzahl SIMs verfügbar gemacht werden. Dass dies durch die räumliche Verteilung zeitaufwendig und kostspielig ist, liegt auf der Hand. Dieses Problem beseitigt der erfindungsgemässe, zentralisierte SIM-Karten-Server (SKS). Ein solcher zentralisierter SKS bietet ausserdem noch zwei weitere Vorteile. Einmal vermindert sich die Anzahl erforderlicher SIMs und zweitens können temporäre Zuordnungen aller SIMs vom zentralen SKS, sprich zentralen Arbeitsplatz, aus durchgeführt werden.

Das erfindungsgemässe Testsystem nutzt nun die ohnehin schon vorhandene Daten-Kommunikation zwischen Mobile Switching Centers (MSCs), Visitor Location Registers (VLRs) und Home Location Registers (HLRs) auch zum Testen. In jedem GSM-Netz existiert nämlich eine Vernetzung der VLRs und HLRs mit dem entsprechenden Routing, um die Daten und Zulassungen der nutzenden Teilnehmer zu prüfen. Diese existierende Funktion wird nun auch für die Vernetzung von Testmodulen (TM) und SKS verwendet. Dem Fachmann ist klar, dass für jedes TM und jeden SKS separate Adressen zu definieren sind und das Routing im Netz entsprechend zu konfigurieren ist.

Für die Durchführung von Roaming und Mobile Service Tests sind folgende Daten von Bedeutung und vor dem Test zu bestimmen:
- Test Daten, d.h. SIM-abhängige Daten, wie die International Mobile Subsrciber Identity (IMSI) oder die Mobile Station Integrated Service Digital Network Nummer (MSISDN);
- Test Cases, das sind vorbereitete Testfälle, die zur Erreichung von ganz bestimmten Testzielen zu eine Test Campaign, also Testkampagne zusammen gestellt werden können, z.B. durch die in einem Memorandum of Understanding der International Roaming Expert Group (MoU IREG) spezifizierten internationalen Roaming Tests;
- die Systemkonfiguration, d.h. Anzahl Test-Module (TMs), Position und Adresse der SIMs, Netzwerkadressen, etc.

Nachfolgend soll nun ein Ausführungsbeispiel des Testsystems anhand der Zeichnungen genauer beschrieben werden.

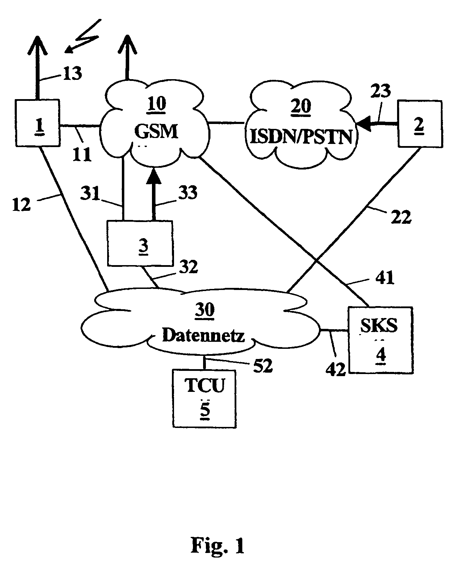

In Fig. 1 ist das Testsystem in einer typischen Umgebung dargestellt. Ein GSM-Netz 10, ein ISDN- oder PSTN-Netz 20 (PSTN steht für Public Switched Telecommunication Network) und ein Datennetz 30 bilden die netzmässige Grundstruktur. Während das GSM-Netz im Beispiel fest mit dem ISDN/PSTN-Netz verbunden ist, sind die anderen Verbindungen zu testende Schnittstellen, wofür Testmodule vorgesehen sind: Ein Testmodul 1 für eine Luftschnittstelle zwischen dem GSM-Netz 10 und dem Datennetz 30, ein Testmodul 2 für eine sog. Festnetz-Schnittstelle zwischen dem festen ISDN/PSTN-Netz 20 und dem Datennetz 30, sowie ein Testmodul 3 für eine A-Schnittstelle (A-Interface) zwischen einem Mobile Switching Center (MSC) eines GSM-Netzes 10 und dem Datennetz 30. Die in Fig. 1 als einfache Box-Elemente dargestellten Testmodule sind in Wirklichkeit komplexe Anordnungen, wie weiter unten noch erläutert werden wird. Weiterhin gezeigt sind in Fig. 1 der SIM-Karten Server (SKS) 4, der über Leitung 41 mit dem GSM-Netz 10 und über Leitung 42 mit dem Datennetz 30 verbunden ist, und die Test Control Unit (TCU) 5, die über Verbindung 52 an das Datennetz gekoppelt ist

Dass die Testmodule funktionsgerecht mit den jeweiligen Netzen 10, 20 und 30, beispielsweise über die Leitungen 13, 23 und 33 für die Testzugriffe, über die Leitungen 12, 22, 32 und 52 als Steuerverbindung (Steuerlinks) zwischen den Testmodulen (TM) 1 und 3, dem SKS 4 und der TCU 5 und über 11, 31 und 41 für die Kommunikation zwischen den Testmodulen 1 und 3 und dem SKS 4 verbunden sind, ist dem Fachmann selbstverständlich. Der Testzugriff 13 kann sowohl durch ein Kabel als auch über Luft, also eine Funkverbindung, erfolgen. Die restlichen Verbindungen sind selbsterklärend.

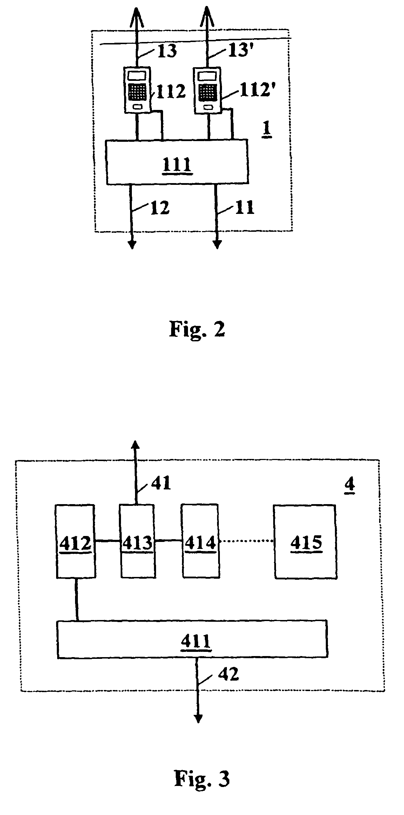

In Fig. 2 ist das Testmodul 1 für die Luftschnittstelle im Detail dargestellt. An eine lokale Steuereinheit 111 sind im Beispiel zwei Mobilstationen (MS) 112 und 112' angeschlossen. Die MS 112 und 112' enthalten, wie bekannt, keine SIM, sondern je einen Adapter, der an Stelle des SIMs eingesteckt ist. Die MS 112 und 112' und der (nicht gezeigte) Adapter sind mit der Steuereinheit 111 verbunden. Wie bekannt, können die MS 112 und 112' über Funk 13 oder über Kabel mit dem Mobilfunknetz 10 (GSM in Fig. 1) kommunizieren. Die Steuereinheit 111 ist über Leitung 11 ebenfalls an das Mobilfunknetz 10 und über Leitung 12 an das Datennetz 30 (Fig. 1) angeschlossen.Die Funktion des Testmoduls 1 ist folgendermassen:

Das Testmodul 1 bekommt von der TCU 5 über das Datennetz 30 und Leitung 12 alle für die Testdurchführung notwendigen Daten. In der Regel ist dies eine sog. Test Campaign, also Testkampagne, welche aus einer Sequenz von einzelnen Test Cases, also Testfällen oder Testanrufen, besteht. Um zeitliche Kollisionen der Testanrufe zu vermeiden, sind die Testmodule durch ein Zeitraster koordiniert.

Die Testkampagne ist in der Steuereinheit 111 gespeichert. Letztere arbeitet zur gegebenen Startzeit die einzelnen Testfälle schrittweise ab. Dabei steuert sie die einzelnen MS 112 und 112' und übergibt ihnen über die serielle Schnittstelle die nötigen Testparameter, wie MSISDN-Nr., Testfiles, etc. Gleichzeitig stellt die Steuereinheit 111 die Kommunikation über Leitung 11 und Mobilfunknetz 10 zum SKS 4 her. Die Adresse des zu einem Testfall gehörende SIMs wird mit den Testdaten von der TCU 5 über Leitung 12 übermittelt.

Fig. 3 zeigt den zentralen SIM-Karten-Server (SKS) 4. Subscriber Identification Modules, d.h. SIMs, werden häufig auch als SIM-Karten bezeichnet; ausgenommen beim SKS wird hier vorzugsweise der Ausdruck SIM benutzt.

Der SIM-Karten-Server (SKS) 4 in Fig. 3 besteht aus einer lokalen Steuereinheit 411, einem internen Controller 412, einem 2 Mbit/s-Interface 413, einem SIM-Controller 414 und einer Anzahl SIM-Karten-Einheiten 415. Die lokale Steuereinheit 411 stellt über das Datennetz 30 die Kommunikation zwischen der TCU 5 und dem internen Controller 412 her. Über die lokale Steuereinheit 411 und den Link 42 zur TCU erfolgt die Konfiguration des SKS 4, wie Abfrage der SIM-Daten, Positionen, usw. Der interne Controller 412 steuert die Kommunikation der Schnittstelle 41 des Interface 413 zum GSM-Netz 10. Der SIM-Controller 414 routed die von den Testmodulen 1 und 3 eintreffenden Meldungen zu den adressierten SIMs und die Antworten entsprechend zurück zu den Testmodulen.

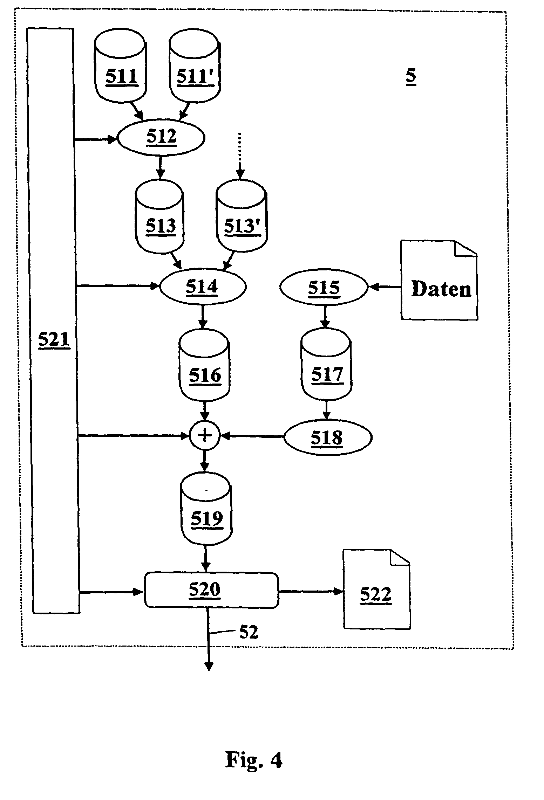

Fig. 4 zeigt die Test Control Unit 5 (Steuereinheit TCU) im Detail. In ihr werden mittels eines Testfall Case Editors 512, aus einzelnen, in Speichereinheiten 511 gespeicherten Testschritten die benötigten Testfälle erstellt, die wiederum in Einheiten 513 gespeichert werden. Mit einem Testsequenz-Editor 514, werden aus diesen Testfällen Testsequenzen, die in Einheiten 516 abrufbereit gespeichert werden. Durch Zusammenführen dieser Testsequenzen aus Speichereinheit 516 mit Konfigurationsdaten der im SKS 4 angeordneten SIMs und der Operatorspezifischen Daten über die Einheiten 515, 517 und 518 werden die genannten, lauffähigen Test Campaigns kreiert, d.h. umfangreiche Testkampagnen, die in Einheit 519 gespeichert werden. Ueber Bedienkonsole 521 werden die Testdaten, wie spezifische Angaben über den Operator, SIM-Daten, etc. erfasst.

Mittels des Schedulers 520 kann eine Testkampagne zeitlich gesteuert automatisch zur Ausführung gebracht werden. Kurz gesagt sorgt die Steuereinheit 5 dafür, dass die einzelnen Komponenten der Testfälle, mit allen nötigen Parametern, in die entsprechenden Testmodule 1, 2 und 3 geladen werden.

Jedes der Testmodule 1, 2 und 3 führt dann die entsprechenden Testfälle an seiner jeweiligen Schnittstelle durch. Da die genannten Testparameter auch Position und Adresse der SIMs einschliessen, ist jedes der Testmodule 1 und 3 in der Lage, über das GSM-Netz 10 mit dem vom Testfall vorbestimmten SIM im SKS 4 zu kommunizieren.

Auf dieser Weise werden alle in einer Testkampagne enthaltenen Testfälle abgearbeitet. Am Ende einer Testkampagne werden die ermittelten Resultate in der Steuereinheit 5 abgespeichert und zur späteren Darstellung, symbolisiert durch Printout 522, z.B. in graphischer oder alphanumerischer Form, aufbereitet.

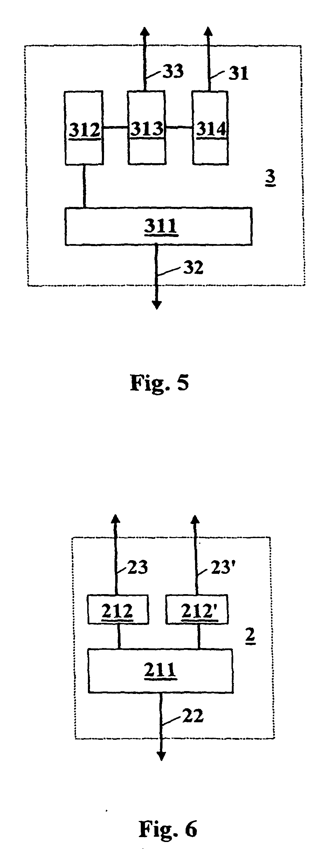

In Fig. 5 ist das Testmodul 3 für die A-Schnittstellen dargestellt. Ähnlich wie der oben beschriebene SKS 4 besteht dieses aus einer lokalen Steuereinheit 311, einem internen Controller 312, einem 2 Mbit/s Interface 313 für den Testzugriff auf die A-Schnittstelle 33 und einem zweiten 2Mbit/s Interface 314 für die Verbindung über Leitung 31 mit dem SKS 4. Die lokale Steuereinheit 311 stellt die Kommunikation zwischen der TCU 5 und dem internen Controller 312 her. Im Testmodul 3 werden die MS durch Softwareprozesse auf dem internen Controller 312 emuliert. Für die Authentication kommuniziert dieser Controller 312 über das Interface 314 und dem Link 31 mit dem SKS 4.

In Fig. 6 ist das Testmodul 2 für die Festnetz-Schnittstellen gezeigt. Dieses Testmodul ist ähnlich wie das oben beschriebene Testmodul 1 aufgebaut. Es besteht aus einer Steuereinheit 211 und zwei oder mehr Modems 212 und 212', die den Testzugriff auf das Festnetz über Links 23 und 23' erlauben. Je nach Bedarf sind diese Modems 212 für analoge oder ISDN-Anschlüsse ausgestattet. Der Testablauf ist ebenfalls ähnlich zu dem von Testmodul 1, nur dass es hier keine Verbindung zum SKS 4 benötigt wird.

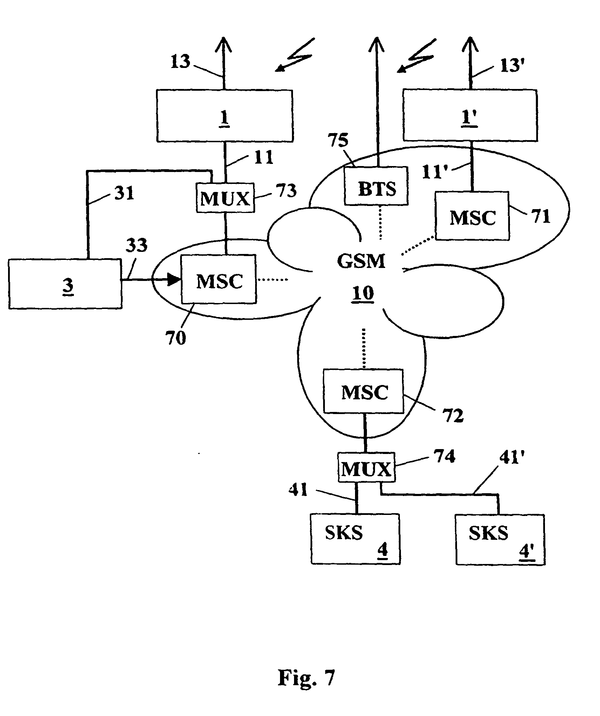

In Fig. 7 schliesslich ist das Konzept der Erfindung dargestellt. Gezeigt sind das GSM-Netz 10 mit einiger seiner Zugänge, insbesondere die Mobile Switching Centers (MSC) 70, 71 und 72 und beispielhaft eine Base Transceiver Station BTS 75, also eine Basis-Sende-Empfangs-station, die die Funkverbindung mit den gezeigten Mobilstationen 1 und 1' ermöglicht. Einige der in der Realität ebenfalls vorhandenen Teile, so das Datennetz 30 und die Steuereinheit 5, sind in Fig. 7 nicht dargestellt, um die Übersichtlichkeit zu wahren. Ausserdem gezeigt ist die Vernetzung mehrerer Testmodule 1 und 3 mit dem SKS 4. Diese erfolgt über die MSC 70, 71 und 72 und die im GSM-Netz 10 vorhandenen Datenkanäle; sowohl die MSCs als auch die Datenkanäle sind für den Betrieb des Systems notwendig und daher ohnehin vorhanden. Zu diesem Zweck besitzt jedes der Testmodule 1 bis 3 ebenso wie der SKS 4 eine 2Mbit/s-Schnittstelle für den Anschluss an das sog. C/D Interface eines MSC. Bei jeden Testfall (Test Case), welcher ein SIM benötigt, sendet das zugehörige Testmodul 1 oder 3 eine entsprechende Meldung (z.B. "RAND", eine der üblicherweise zur Authentication benutzten Meldungen) an die Adresse des betroffenen SIM innerhalb des SKS 4, sowie den Point Code, d.h. die IP-Adresse des SKS 4. Diese Adresse ermöglicht einerseits dem Datennetz 30, Meldungen an die richtige Adresse zu routen, und andererseits dem SKS 4, Meldungen an das verlangte SIM weiterzuleiten. Jeder Meldung wird zumindest die Identifikation (Absender-Adresse) des Testmoduls mitgegeben, um die Antworten an das abfragenden Testmodul routen zu können.

Dabei können sowohl jedes der Testmodule (TM) 1, 2 oder 3 als auch der SKS 4 entweder direkt oder über einen Multiplexer (MUX) 73, 74 an einem 2Mbit/s Trunk angeschlossen werden. Da pro Testmodul oder SKS 4 nur eine Zeitschlitz mit 64 Kbit/s nötig ist, kann dieser Zeitschlitz durch einem MUX 73 oder 74 einfach aus einem 2 Mbit/s Trunk extrahiert werden. Die so hergestellte Verbindung wird ausschliesslich für die Kommunikation zwischen dem SKS 4 und dem jeweiligen TM benutzt. Die zusätzliche Last für das Netz ist verschwindend klein, da nur wenige Meldungen pro Verbindungsaufbau und Mobilstation nötig sind.

Der SIM-Karten-Server 4 kann modular aus Einheiten aufgebaut sein, wobei eine einzelne SKS-Einheit, in Fig. 7 dargestellt als SKS 4' und SKS 4", bis zu 568 SIMs aufnehmen und für eine Testsystem mit mehreren Testmodulen 1 und 3 zur Verfügung stellen kann. Diese SKS-Einheiten können sowohl integriert als auch separat angeordnet werden. Bei separater Anordnung können die Einheiten sowohl am gleichen Ort als auch an getrennten Orten etabliert werden. Mehrere der Testmodule 1 und 3 und mehrere Testfälle (Test Cases) können nun quasiparallel auf jede der SKS-Einheiten zugreifen, d.h. es ist ein praktisch vollständiger Parallelbetrieb möglich. Bei Bedarf können mehrere SKS-Einheiten integriert werden, so dass die Anzahl der für Tests verfügbaren SIMs praktisch beliebig gross gemacht werden kann.

Zur Steuerung und Konfiguration des Testsystems und für die Übermittlung der Resultate wird weiterhin das separate Datennetz 30 benutzt, das beispielsweise als LAN oder WAN, oder auch als X.25-Netz ausgebildet sein kann.

Die folgende Bezugszeichenliste ist ausführlich gehalten, um dem Fachmann zusammen mit den Zeichnungen und der vorstehenen Beschreibung ein detailliertes Bild eines Ausführungsbeispiels der Erfindung zu geben.

### Bezugszeichenliste

**Fig. 1 Gesamtansicht**
   - 1: Testmodul für die Luftschnittstelle
   - 2: Testmodul für die ISDN- oder analoge Schnittstelle
   - 3: Testmodul für die A-Schnittstelle
   - 4: SIM-Karten-Server (SKS) in Fig. 7 auch 4' und 4" je eine Einheit;
   - 5: Test Control Unit (TCU)
   - 10: Global System for Mobile Communication (GSM)
   - 11: Datenlink vom Testmodul 1 zum SKS 4 via GSM-Netz 10
   - 12: Steuerlink vom Testmodul 1 zur TCU 5 via Datennetz 30
   - 13: Funkverbindung zum GSM-Netz 10
   - 20: Festnetz, z.B. Integrated Services Digital Network (ISDN) und/oder Public Switched Telecommunication Network (PSTN)
   - 22: Steuerlink vom Testmodul 2 zur TCU 5
   - 23: Testanschluss für analoge und/oder ISDN-Teilnehmeranschlüsse
   - 30: Datennetz, z.B. ein LAN, WAN oder ein X.25-Netz zwischen der TCU 5, dem SKS 4 und den Testmodulen 1, 2 und 3
   - 31: Datenlink vom Testmodul 3 zum SKS 4
   - 32: Steuerlink vom Testmodul 3 zur TCU 5
   - 33: A-Schnittstelle (am Mobile Switching Center, MSC, s. Fig. 7)
   - 41: Datenlink vom SKS 4 zu den Testmodulen 1 und 3
   - 42: Steuerlink von der TCU 5 zum SKS 4
   - 52: Steuerlink von der TCU 5 zum SKS 4 und den Testmodulen 1, 2 und 3
**Fig. 2 Testmodul für die Luftschnittstelle**
   - 11: Datenlink zum SKS 4 via GSM-Netz 10
   - 12: Steuerlink zur TCU 5 via Datennetz 30
   - 13, 13': Funkverbindungen zum GSM Netz 10
   - 111: lokale Steuereinheit
   - 112, 112': Mobilstationen (MS)
**Fig. 3 Zentraler SIM-Karten Server (SKS)**
   - 41: Datenlink zu den Testmodulen 1 und 3 via GSM Netz 10
   - 42: Steuerlink zur TCU 5 via Datennetz 30
   - 411: lokale Steuereinheit für die Kommunikation mit der TCU 5
   - 412: interner Controller für die Kommunikation mit den Testmodulen 1 und 3
   - 413: Interface für den Anschluss an das GSM Netz 10
   - 414: Controller für die SIM-Karten-Einheit 415
   - 415: modulare SIM-Karten-Einheit mit einer Vielzahl SIMs
**Fig. 4 Steuereinheit, Test Control Unit (TCU)**
   - 52: Steuerleitung zu den Testmodulen 1, 2 und 3 und zum SKS 5
   - 511: Speicher für Testschritte (Teststeps)
   - 512: Test Case Editor
   - 513: Speicher für Testfälle (Test Cases)
   - 514: Testsequenz-Editor
   - 515: Eingabe der Testdaten, manuell oder maschinell lesbare Testdaten
   - 516: Speicher für Testsequenzen
   - 517: Speicher für Testdaten
   - 518: Editor für Testdaten und Erzeugung ausführbarer Testkampagnen (Test Campaigns)
   - 519: Speicher für Testkampagnen (Test Campaigns)
   - 520: Scheduler für die Kontrolle des zeitlichen Testablaufes
   - 521: Bedieneinheit
   - 522: Ausgabe der Testresultate
**Fig. 5 Testmodul für die A-Schnittstelle**
   - 31: Datenlink zum SKS 4 via GSM Netz 10
   - 32: Steuerlink zur TCU 5 via Datennetz 30
   - 33: A-Schnittstelle (Testzugriff am Mobile Switching Center, MSC, s. Fig. 7)
   - 311: lokale Steuereinheit für die Kommunikation mit der TCU 5
   - 312: interner Controller für die Kommunikation mit der A-Schnittstelle 33 und dem SKS 4
   - 313: Interface für den Anschluss an die A-Schnittstelle 33 (Test)
   - 314: Interface für den Anschluss an das GSM Netz 10
**Fig. 6 Testmodul für die Festnetz-Schnittstelle**
   - 22: Steuerlink zur TCU 5 via Datennetz 30
   - 23, 23': Testzugriffe auf analoge und/oder ISDN-Teilnehmeranschlüsse des Netzes 20
   - 211: lokale Steuereinheit für die Kommunikation mit der TCU 5
   - 212, 212': Modems
**Fig. 7 Beispiel für den Anschluss eines SIM-Servers an ein GSM-Netz**
   - 1, 1': Testmodule für Luftschnittstelle
   - 3: Testmodul für die A-Schnittstelle
   - 4, 4': SIM-Server, je eine Einheit
   - 10: GSM-Netz
   - 11, 11': Datenlinks
   - 13, 13': Funkverbindungen
   - 31: Datenlink
   - 33: A-Schnittstelle
   - 41, 41': Datenlinks
   - 70: Mobile Switching Center (MSC)
   - 71, 72: weitere MSCs
   - 73, 74: Multiplexer (MUX)
   - 75: Base Transceiver Station (BTS) für Funkverbindung
   - 70-75: sind interne Bestandteile des GSM 10

## Patentansprüche

1. Testanordnung zur Prüfung der Übertragungswege, insbesondere der Luftschnittstellen und der Netzübergänge, mittels sogenannter Testmodule in einem aus vernetzten Vermittlungs-systemen bestehenden Mobilkommunikationsnetz, dessen Teilnehmer-Mobilstationen mit einem den Teilnehmer identifizierenden Subscriber Identification Module (SIM) ausgerüstet sind, dessen Daten in mindestens einer Datenbank eines Vermittlungssystems zumindest teilweise gespeichert sind, mit
- einer Mobilstation, die statt des SIMs mit einem Adaptermodul ausgestattet ist, das selektiv mit jeweils einem von einer Mehrzahl von SIMs verbindbar ist, so dass das jeweils verbundene SIM in der mit dem Adaptermodul versehenen Mobilstation emuliert wird,
- einer Einrichtung zur Aufnahme der SIMs und
- einer Steuereinrichtung, die die Auswahl und Verbindung der SIMs mit der das Adaptermodul enthaltenden Mobilstation steuert,
**dadurch gekennzeichnet, dass**
- die Einrichtung zur Aufnahme der SIMs als zentraler SIM-Server (4) ausgebildet ist,
- die Steuereinrichtung (5) zentral angeordnet ist,
- unterschiedliche Testmodule (1, 2, 3) räumlich verteilt vorgesehen sind, die zumindest teilweise mit Adaptermodulen versehene Mobilstationen (112) enthalten, und
- SIM-Server (4), Steuereinrichtung (5) und Testmodule (1, 2, 3) über ein die Vermittlungssysteme verbindenden Datennetz (30) verbunden sind.

2. Testanordnung nach Anspruch 1, **dadurch gekennzeichnet, dass**
- zumindest ein Teil der räumlich verteilten Testmodule (3) Software enthält, die eine Mobilstation simuliert und auf die SIMs im SIM-Server (4) Zugriff hat.

3. Testanordnung nach einem der Ansprüche 1 oder 2, **dadurch gekennzeichnet, dass**
- zumindest ein Teil der räumlich verteilten Testmodule (2) Software enthält, die weitere Netzteilnehmer simuliert ohne Zugriff auf die SIMs im SIM-Server (4).

4. Testanordnung nach Anspruch 1, **dadurch gekennzeichnet, dass**
- das Datennetz (30) ein vorhandenes Teilnetz ist.

5. Testanordnung nach Anspruch 4, **dadurch gekennzeichnet, dass**
- das Datennetz (30) ein für die Wartung des GSM-Netzes (30) vorgesehenes Servicenetz ist.

6. Testanordnung nach mindestens einem der vorhergehenden Ansprüche, **dadurch gekennzeichnet, dass**
- praktisch gleichzeitig mehrere Tests durch die Steuereinheit (5) durchführbar sind, wobei mehrere der räumlich verteilten, mit Adaptermodulen versehene Mobilstationen (112) in bestimmten Testmodulen (1, 3) auf den SIM-Server (4) zugreifen.

7. Testanordnung nach mindestens einem der vorhergehenden Ansprüche, **dadurch gekennzeichnet, dass**
- die Testmodule (1, 3) die Testzugriffe über eine Luftschnittstelle (13) und/oder über ein A-Interface (33) bereitstellen, wobei
- die Testzugriffe über das A-Interface (33) durch Softwaresimulation und
- die Testzugriffe über die Luftschnittstellen (13) mittels der mit Adaptermodulen versehenen Mobilstationen (112) erfolgen.

8. Testanordnung nach mindestens einem der vorhergehenden Ansprüche, **dadurch gekennzeichnet, dass**
- der SIM-Server (4) statt über das Datennetz (30) unmittelbar mit der Steuereinheit (5) verbunden ist oder
- SIM-Server (4) und Steuereinheit (5) eine Einheit bilden.

9. Testanordnung nach mindestens einem der vorhergehenden Ansprüche, **dadurch gekennzeichnet, dass**
- der SIM-Server (4) und die Steuereinheit (5) ausschliesslich über das GSM-Netz (10) mit bestimmten Testmodulen (1, 3) verbindbar ist.

10. Testanordnung nach mindestens einem der vorhergehenden Ansprüche, **dadurch gekennzeichnet, dass**
- der SIM-Server aus modularen Einheiten (Fig. 7: 4', 4") aufgebaut ist, wobei jede der Einheiten eine Vielzahl von SIMs aufnehmen kann, und
- die modularen Einheiten gemeinsam von der Steuereinheit (5) gesteuert werden.

11. Verfahren zum Betrieb der Testanordnung nach einem der vorhergehenden Anordnungsansprüche, **dadurch gekennzeichnet, dass** durch die Steuereinheit
- selektiv jede der mit einen Adaptermodul ausgerüsteten, räumlich verteilten Mobilstationen (112, 112') mit jeweils einem der SIMs im SIM-Server (4) zumindest virtuell verbunden wird, so dass jede selektierte Mobilstation das jeweils verbundene SIM emuliert, und
- bestimmte räumlich verteilte Testmodule (1, 3) von diesen mit Adaptermodulen versehenen Mobilstationen (112) über das Datennetz (30) angesteuert werden.

12. Verfahren zum Betrieb der Testanordnung nach Anspruch 11, **dadurch gekennzeichnet, dass**
- selektiv jeweils eines der räumlich verteilten Testmodule (1, 2, 3) einem der mit einen Adaptermodul ausgerüsteten, räumlich verteilten Mobilstationen (112, 112') zugeordnet wird und
- die Verbindung bzw. Zuordnung durch die zentral angeordnete Steuereinrichtung (5) erfolgt.

13. Verfahren zum Betrieb der Testanordnung nach einem der Ansprüche 11 oder 12, **dadurch gekennzeichnet, dass**
- praktisch gleichzeitig mehrere Tests durch die Steuereinheit (5) durchgeführt werden, wobei mehrere der räumlich verteilten, mit Adaptermodulen versehene Mobilstationen (112) in bestimmten Testmodulen (1, 3) auf den SIM-Server (4) zugreifen.

## Claims

1. A test facility for monitoring communication circuits, in particular the air interfaces and gateways, using so-called test modules in a mobile communications network consisting of networked switching systems, the subscriber mobile stations of which are equipped with a Subscriber Identification Module (SIM), the data of which is stored at least partially in at least one data bank of a switching system, with
- one mobile station which is equipped with an adapter module instead of the SIM, which can selectively be connected to each one of a plurality of SIMs, so that each of the connected SIMs is emulated in the mobile station equipped with the adapter module
- a device for holding the SIMs, and
- a control unit which controls the selection and connection of the SIMs to the mobile station containing the adapter module,
**characterised in that**
- the device for holding the SIMs is designed as a central SIM server (4),
- the control unit (5) is located centrally,
- different test modules (1, 2, 3) are provided spatially distributed, and contain mobile stations (112) that are at least partially equipped with adapter modules, and
- the SIM server (4), control unit (5) and test modules (1, 2, 3) are connected via a data network (30) which connects the switching systems.

2. A test facility according to claim 1, **characterised in that**
- at least one part of the spatially distributed test modules (3) contain software which simulates a mobile station and which has access to the SIMs in the SIM server (4).

3. A test facility according to any one of claims 1 or 2, **characterised in that**
- at least one part of the spatially distributed test modules (2) contain software which simulates further network subscribers, without having access to the SIMs in the SIM server (4).

4. A test facility according to claim 1, **characterised in that**
- the data network (30) is an available partial network.

5. A test facility according to claim 4, **characterised in that**
- the data network (30) is a service network for maintaining a GSM network (30).

6. A test facility according to at least one of the preceding claims, **characterised in that**
- several tests can be performed by the control unit (5) virtually at the same time, wherein several of the spatially distributed mobile stations (112) equipped with adapter modules access the SIM server (4) in certain test modules (1, 3).

7. A test facility according to at least one of the preceding claims, **characterised in that**
- the test modules (1, 3) provide the test access via one air interface (13) and/or an A interface (33), wherein
- the test access via the A interface (33) is conducted using software simulation, and
- the test access via the air interfaces (13) is conducted by the mobile stations (112) equipped with adapter modules.

8. A test facility according to at least one of the preceding claims, **characterised in that**
- the SIM server (4) is connected directly with the control unit (5) instead of via the data network (30), or
- the SIM server (4) and the control unit (5) form a unit.

9. A test facility according to at least one of the preceding claims, **characterised in that**
- the SIM server (4) and the control unit (5) can only be connected to certain test modules (1, 3) via the GSM network (10).

10. A test facility according to at least one of the preceding claims, **characterised in that**
- the SIM server is constructed from modular units (Fig. 7: 4', 4"), wherein each of the units can accept a large number of SIMs, and
- the modular units are controlled together by the control unit (5).

11. A procedure for operating the test facility according to any one of the preceding facility claims, **characterised in that**
via the control unit
- each of the spatially distributed mobile stations (112, 112') which are equipped with an adapter module is at least virtually connected in each case with one of the SIMs in the SIM server (4), so that each selected mobile station emulates the SIM with which it is connected, and
- certain spatially distributed test modules (1, 3) are triggered via the data network (30) by these mobile stations (112) which are equipped with adapter modules.

12. A procedure for operating the test facility according to claim 11, **characterised in that**
- one of the spatially distributed test modules (1, 2, 3) is selectively allocated in each case to one of the spatially distributed mobile stations (112, 112') which are equipped with an adapter module, and
- the connection or allocation is conducted by the centrally located control unit (5).

13. A procedure for operating the test facility according to one of claims 11 or 12, **characterised in that**
- several tests are conducted by the control unit (5) at virtually the same time, wherein several of the spatially distributed mobile stations (112) which are equipped with adapter modules access the SIM server (4) in certain test modules (1, 3).

## Revendications

1. Dispositif de test pour tester les voies de transmission, en particulier des interfaces d'air et des transitions de réseau, au moyen de ce qu'on appelle des modules de test dans un réseau de communication mobile, composé de systèmes de commutation mis en réseau, dont les postes mobiles d'abonnés sont équipés d'un Subscriber Identification Module (SIM) identifiant l'abonné et dont les données sont stockées au moins partiellement dans au moins une banque de données d'un système de commutation, avec
- un poste mobile qui, au lieu du SIM, est équipé d'un module adaptateur qui peut être connecté, de façon sélective et respectivement, à un d'une pluralité de SIM de sorte que le SIM respectivement connecté est émulé dans le poste mobile muni du module adaptateur,
- un équipement pour loger les SIM et
- un équipement de commande qui commande la sélection et la connexion des SIM au poste mobile contenant le module adaptateur,
**caractérisé en ce que**
- l'équipement pour loger les SIM est constitué comme un serveur SIM (4) central,
- l'équipement de commande (5) est disposé de façon centrale,
- différents modules de test (1, 2, 3) sont prévus, répartis dans l'espace, qui contiennent des postes mobiles (112) munis au moins partiellement de modules adaptateurs, et
- le serveur SIM (4), l'équipement de commande (5) et les modules de test (1, 2, 3) sont connectés via un réseau de données (30) connectant les systèmes de commutation.

2. Dispositif de test selon la revendication 1, **caractérisé en ce que**
- au moins une partie des modules de test (3) répartis dans l'espace contient un logiciel qui simule un poste mobile et qui a accès aux SIM dans le serveur SIM (4).

3. Dispositif de test selon une des revendications 1 ou 2, **caractérisé en ce que**
- au moins une partie des modules de test (2) répartis dans l'espace contient un logiciel qui simule d'autres abonnés du réseau sans accès aux SIM dans le serveur SIM (4).

4. Dispositif de test selon la revendication 1, **caractérisé en ce que**
- le réseau de données (30) est un réseau partiel existant.

5. Dispositif de test selon la revendication 4, **caractérisé en ce que**
- le réseau de données (30) est un réseau de service prévu pour la maintenance du réseau GSM (30).

6. Dispositif de test selon au moins une des revendications précédentes,
**caractérisé en ce que**
- plusieurs tests peuvent être exécutés pratiquement simultanément par l'unité de commande (5), plusieurs des postes mobiles (112) répartis dans l'espace et munis de modules adaptateurs accédant au serveur SIM (4) dans certains modules de test (1, 3).

7. Dispositif de test selon au moins une des revendications précédentes,
**caractérisé en ce que**
- les modules de test (1, 3) préparent les accès de test via une interface d'air (13) et/ou via une interface A (33),
- les accès de test survenant via l'interface A (33) par simulation logicielle et
- les accès de test survenant via les interfaces d'air (13) au moyen des postes mobiles (112) munis de modules adaptateurs.

8. Dispositif de test selon au moins une des revendications précédentes,
**caractérisé en ce que**
- le serveur SIM (4) est connecté directement à l'unité de commande (5) au lieu de l'être via le réseau de données (30), ou
- le serveur SIM (4) et l'unité de commande (5) forment une unité.

9. Dispositif de test selon au moins une des revendications précédentes,
**caractérisé en ce que**
- le serveur SIM (4) et l'unité de commande (5) peuvent être connectés à certains modules de test (1, 3) exclusivement via le réseau GSM (10).

10. Dispositif de test selon au moins une des revendications précédentes,
**caractérisé en ce que**
- le serveur SIM est constitué d'unités modulaires (figure 7 : 4', 4"), chacune des unités pouvant loger une multiplicité de SIM, et .
- les unités modulaires sont commandées en commun par l'unité de commande (5).

11. Procédé d'utilisation du dispositif de test selon une des revendications précédentes se référant au dispositif ci-dessus, **caractérisé en ce que** l'unité de commande
- connecte au moins virtuellement et de façon sélective chacun des postes mobiles (112, 112') répartis dans l'espace et munis d'un module adaptateur à respectivement un des SIM dans le serveur SIM (4), de sorte que chaque poste mobile sélectionné émule le SIM respectivement connecté, et
- certains modules de test (1, 3) répartis dans l'espace sont pilotés par ces postes mobiles (112) munis de modules adaptateurs via le réseau de données (30).

12. Procédé d'exploitation du dispositif de test selon la revendication 11,
**caractérisé en ce que**
- respectivement un des modules de test (1, 2, 3) répartis dans l'espace est affecté, de façon sélective, à un des postes mobiles (112, 112') répartis dans l'espace et munis d'un module adaptateur, et
- la connexion ou l'affectation est effectuée par l'équipement de commande (5) disposé de façon centrale.

13. Procédé d'exploitation du dispositif de test selon une des revendications 11 ou 12, **caractérisé en ce que**
- plusieurs tests sont effectués pratiquement simultanément par l'unité de commande (5), plusieurs des postes mobiles (112) répartis dans l'espace et munis de modules adaptateurs accédant, dans certains modules de test (1, 3), au serveur SIM (4).
